# EUROPEAN PATENT APPLICATION

(11) **EP 4 458 917 A1**
(43) Date of publication of application: **06.11.2024**
(21) Application number: 22915889.4
(22) Date of filing: 21.12.2022
(51) Int. Cl.: C09J 5/06, B29C 65/40, C09J 7/35, C09J 163/00, C09J 171/12

(54) **METHOD FOR PRODUCING BONDED BODY**

(30) Priority: 27.12.2021 JP 2021213480
(71) Applicant: Resonac Corporation, Tokyo 105-7325 (JP)
(72) Inventor: TAKAHASHI, Nobuyuki, Minato-ku, Tokyo 105-7325 (JP); MORI, Masatoshi, Minato-ku, Tokyo 105-7325 (JP)
(74) Representative: Strehl Schübel-Hopf & Partner
(86) International application number: PCT/JP2022/047240
(87) International publication number: WO 2023/127666

(57) **Abstract**

Disclosed is a method for producing a joined body obtained by joining a base material A, a solid joining agent containing an amorphous thermoplastic resin, which is at least one of a thermoplastic epoxy resin and a phenoxy resin, as a main component, and a base material B in this order, in which at least the base material A is a thermoplastic resin base material, an epoxy equivalent of the amorphous thermoplastic resin is 1,600 g/eq. or more or the amorphous thermoplastic resin does not contain an epoxy group, and a heat of fusion of the amorphous thermoplastic resin is 15 J/g or less, and the method has a step of superposing and a joining step (1), or has a joining step (2-1) and a joining step (2-2).

## Description

### Technical Field

The present invention relates to a method for producing a joined body which is suitable for applications in which different kinds of materials are easily and firmly joined.

### Background Art

In recent years, multi-materialization of parts in various fields, such as automobile parts, medical equipment, and home appliances, has been progressing from the viewpoint of weight reduction and high capability of products. The multi-materialization is a method of reducing the weight of a material and increasing the strength of the material by using materials (hereinafter, referred to as different kinds of materials) having different functions and materials in combination. In order to realize the multi-materialization, a technique for firmly joining the different kinds of materials is indispensable.

As a means for firmly joining different kinds of materials, a technique has been disclosed in which a thermosetting epoxy resin composition is impregnated or coated on a base material and then semi-cured (B-staged) to form a multilayer body having an adhesive layer made of a B-staged thermosetting epoxy resin-based adhesive, which is used for producing a joined body (PTL 1 and the like).

However, the B-stage-shaped adhesive layer has problems that the storage stability is poor, the long-term storage at ordinary temperature is not possible, the storage at a low temperature is required, the open time is short, and the convenience is lacking.

In the description herein, the open time means a limited time from when a joining agent or an adhesive is applied or placed on a base material A to when a base material B is completely placed on the base material A. Within the open time, the bonding force of the joining agent or the adhesive is not reduced, and the base material A and the base material B can be bonded to each other with a sufficient bonding force. The longer the open time is, the longer the time limit from the application or placement of the joining agent or the adhesive on the base material A to the completion of the placement of the base material B becomes, which is highly convenient.

As another means for joining different kinds of materials, a technique using a thermoplastic adhesive composition (hereinafter, hot-melt adhesive) has been disclosed (PTL 2 and the like). The hot-melt adhesive is solid at ordinary temperature, and is liquefied by being heated and melted. The liquefied hot-melt adhesive is applied to an adherend, and joining is formed by cooling and solidification. Since the hot-melt adhesive performs adhesion by utilizing a phase change that does not involve a polymerization reaction, the curing time is short, and the convenience is excellent. Further, the hot-melt adhesive can be stored at ordinary temperature for a long period of time, and is excellent in convenience in that the open time is long.

However, since the conventional hot-melt adhesive is composed of a crystalline resin or a resin containing a crystalline resin in order to lower the melt viscosity, the cohesive force in the adhesive resin is high, and the hot-melt adhesive cannot have a sufficient interaction with the base material. In addition, during melting and adhesion, the viscosity becomes low at high temperatures, and it is easy to flow out from the bonding surface, and the film thickness is not stable because it is difficult to control the viscosity. Due to these factors, there are problems that a high bonding force cannot be stably obtained with the conventional hot-melt adhesive, and a joined body having a desired size cannot be obtained in some cases. In particular, there is a problem that a joined body having a desired size cannot be stably obtained when a dimensional error of the material to be joined is large.

### Citation List

### Patent Literature

PTL 1: JP 10-17685 A
PTL 2: JP 10-168417 A

### Summary of Invention

### Technical Problem

The present invention has been made in view of such technical background, and it is an object of the present invention to provide a method for producing a joined body which has a long open time, can absorb a dimensional error of a base material, and can produce a joined body having excellent joining property.

### Solution to Problem

As a result of extensive studies, the present inventors have found that the above-mentioned problems can be solved by having a step of superposing a base material A which is a thermoplastic resin, a predetermined solid joining agent and a base material B in this order, and a joining step (1) of joining the base material A and the base material B under predetermined conditions, or having a joining step (2-1) of joining at least one of the base material A which is a thermoplastic resin base material and the base material B with a predetermined solid joining agent under predetermined conditions, and a joining step (2-2) of joining the base material A and the base material B under predetermined conditions. The present invention is based on this finding.

That is, the present invention provides the following [1] to [10].
[1] A method for producing a joined body obtained by joining a base material A, a solid joining agent containing an amorphous thermoplastic resin, which is at least one of a thermoplastic epoxy resin and a phenoxy resin, as a main component, and a base material B in this order, in which at least the base material A is a thermoplastic resin base material, an epoxy equivalent of the amorphous thermoplastic resin is 1,600 g/eq. or more or the amorphous thermoplastic resin does not contain an epoxy group, and a heat of fusion of the amorphous thermoplastic resin is 15 J/g or less, and the method includes: a step of superposing the base material A, the solid joining agent, and the base material B in this order; and a joining step (1) of joining the base material A and the base material B by pressurizing the base material A and the base material B via the solid joining agent in a state in which a temperature of the joining surface of at least one of the base material A, the solid joining agent, and the base material B is raised to the melting point thereof or higher.
[2] A method for producing a joined body obtained by joining a base material A, a solid joining agent containing an amorphous thermoplastic resin, which is at least one of a thermoplastic epoxy resin and a phenoxy resin, as a main component, and a base material B in this order, in which at least the base material A is a thermoplastic resin base material, an epoxy equivalent of the amorphous thermoplastic resin is 1,600 g/eq. or more or the amorphous thermoplastic resin does not contain an epoxy group, and a heat of fusion of the amorphous thermoplastic resin is 15 J/g or less, and the method includes: a joining step (2-1) of joining at least one of the base material A and the base material B to the solid joining agent in a state in which a temperature of the joining surface of at least one of the base materials and the solid joining agent is raised to the melting point thereof or higher; and a joining step (2-2) of joining the base material A and the base material B by pressurizing the base material A and the base material B via the solid joining agent in a state in which a temperature of the joining surface of at least one of the base material A and the base material B is raised to the softening point thereof or higher.
[3] The method for producing a joined body according to [1] above, in which in the joining step (1), the temperature of the joining surface is raised by heating with radiant heat.
[4] The method for producing a joined body according to [2] above, in which in the joining step (2-1), the temperature of the joining surface is raised by heating with radiant heat.
[5] The method for producing a joined body according to [2] or [4] above, in which in the joining step (2-2), the temperature of the joining surface is raised by heating with radiant heat.
[6] The method for producing a joined body according to any one of [1] to [5] above, in which the solid joining agent before melting has any shape selected from the group consisting of a film, a rod, a pellet, and a powder.
[7] The method for producing a joined body according to any one of [1] to [6] above, in which the solid joining agent before melting is a film.
[8] The method for producing a joined body according to any one of [1] to [7] above, in which the base material B is made of at least one of a resin and a metal.
[9] The method for producing a joined body according to any one of [1] to [8] above, in which the base material B is made of a metal.
[10] The method for producing a joined body according to [8] or [9] above, further including a step of forming a primer layer made of a solid joining agent on the joining surface of the metal.

### Advantageous Effects of Invention

According to the present invention, it is possible to provide a method for producing a joined body, which can produce a joined body having a long open time, capable of absorbing a dimensional error of a base material, and having excellent joining property.

### Brief Description of Drawings

Fig. 1 is an explanatory view showing a configuration of a joined body according to a first embodiment and a second embodiment of the present invention.
Fig. 2 is an explanatory view showing a configuration of a resin member.
Fig. 3 is an explanatory view showing a configuration of a metal member.
Fig. 4 is an explanatory view showing a configuration of a joined body of a resin member and a metal member.

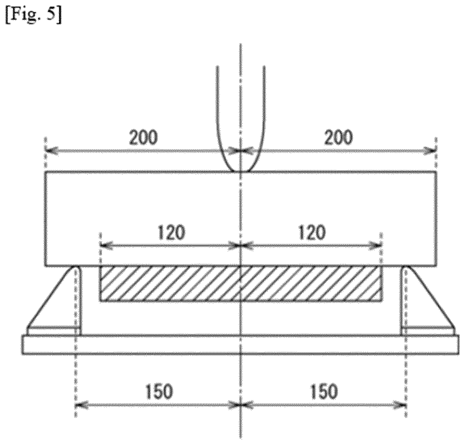

Fig. 5 is an explanatory view showing a configuration of a three-point bending compression testing machine.

### Description of Embodiments

Hereinafter, embodiments of the present invention will be described in detail.

In the description herein, the term "joining" means coupling materials together, and adhesion (bonding) and welding are narrower concepts thereof. The term "adhesion" means that two adherends (to be adhered to each other) are placed in a joined state through an organic material (such as thermosetting resins or thermoplastic resins) such as a tape or an adhesive. The term "welding" means bringing the surfaces of thermoplastic resins and the like into a joined state by utilizing entanglement and crystallization due to molecular diffusion, which occur in the process of melting the surfaces by heat and cooling the surfaces.

In the description herein, the "joined body formed by joining in this order" means that joining is spatially performed in this order.

In the description herein, the term "melting point" means an endothermic peak temperature measured by DSC. In the case where an endothermic peak is not obtained or the heat of fusion is 15 J/g or less, a temperature obtained by adding 70°C to the glass transition point is taken as the melting point. The glass transition point means a temperature at the start of the drop in a DSC curve in a second cycle in which the temperature is raised to 200°C, then cooled to 40°C or lower, and then heated to 200°C in DSC. Specifically, the glass transition point is a value measured by the method described in Examples.

In the description herein, the description of "A to B" indicating a numerical range indicates a numerical range including A and B which are endpoints. That is, it means "A or more and B or less" (when A < B), or "A or less and B or more" (when A > B).

### [Production Method of Joined Body]

Hereinafter, the method for producing a joined body of the present invention will be described in more detail using embodiments.

### <First Embodiment>

The method for producing a joined body according to the first embodiment of the present invention is a method for producing a joined body obtained by joining a base material A, a solid joining agent containing an amorphous thermoplastic resin, which is at least one of a thermoplastic epoxy resin and a phenoxy resin, as a main component, and a base material B in this order, in which at least the base material A is a thermoplastic resin base material, an epoxy equivalent of the amorphous thermoplastic resin is 1,600 g/eq. or more or the amorphous thermoplastic resin does not contain an epoxy group, and a heat of fusion of the amorphous thermoplastic resin is 15 J/g or less, and the method includes: a step of superposing the base material A, the solid joining agent, and the base material B in this order; and a joining step (1) of joining the base material A and the base material B by pressurizing the base material A and the base material B via the solid joining agent in a state in which a temperature of the joining surface of at least one of the base material A, the solid joining agent, and the base material B is raised to the melting point thereof or higher.

According to the method for producing a joined body according to the first embodiment, the joining of the base material A and the base material B utilizes a phase change (solid to liquid to solid) of a solid joining agent containing an amorphous thermoplastic resin, which is at least one of a thermoplastic epoxy resin and a phenoxy resin, as a main component, and does not involve a chemical reaction, so that the open time is long.

In addition, since the predetermined thermoplastic epoxy resin and the phenoxy resin, which are the main components of the solid joining agent, have a low cohesive force in the resins and have a hydroxy group, they interact strongly with the base material, and can join different kinds of materials with a higher joining force than conventional crystalline hot-melt adhesives.

In the production method, the base material A and the base material B are joined to each other by pressurizing the base material A and the base material B via the solid joining agent in a state in which the temperature of the joining surface of at least one of the base material A, the solid joining agent, and the base material B is raised to the melting point thereof or higher. By joining in this way, it is possible to adjust the shape of the joined body and absorb the dimensional errors of the base material A and the base material B, and as a result, a joined body having a desired dimension can be obtained.

In the first embodiment, the "temperature of the joining surface of at least one of the base material A, the solid joining agent, and the base material B" specifically represents the temperature of at least one selected from the joining surface of the base material A with the solid joining agent, the joining surface of the solid joining agent with the base material A, the joining surface of the solid joining agent with the base material B, and the joining surface of the base material B with the solid joining agent.

In addition, the "state in which the temperature of the joining surface is raised to the melting point thereof or higher" means a state in which the temperature is raised to the melting point or higher of the base material A on the joining surface of the base material A with the solid joining agent, a state in which the temperature is raised to the melting point or higher of the solid joining agent on the joining surface of the solid joining agent with the base material A, a state in which the temperature is raised to the melting point or higher of the solid joining agent on the joining surface of the solid joining agent with the base material B, and a state in which the temperature is raised to the melting point or higher of the base material B on the joining surface of the base material B with the solid joining agent.

### (Superposing Step)

The method for producing a joined body according to the first embodiment includes a superposing step. The superposing step is a step of superposing the base material A, the solid joining agent, and the base material B in this order.

It should be noted that "superposing in this order" means spatially superposing in this order.

There is no limit to the method of superposing the solid joining agent.

In the first embodiment, when the base material B is made of a metal, the superposing step may be carried out after a primer layer made of a solid joining agent is formed on the surface of the base material B in advance. That is, a step of forming a primer layer made of a solid joining agent on the joining surface of the base material B may be included. The joining surface of the base material B means a surface to be joined to the solid joining agent of the base material B.

### [Solid Joining Agent]

The term "solid" of the solid joining agent means that it is solid at ordinary temperature, that is, it has no fluidity in a state where it is not pressurized at 23°C.

It is desirable that the solid joining agent can maintain its outer shape without being deformed for 30 days or longer in a state where it is not pressurized at 23°C, and further has characteristics that it does not deteriorate.

The term "main component" means a component having the highest content among the resin components in the solid joining agent and having a content of 50% by mass or more in the resin components in the solid joining agent. The solid joining agent preferably contains 50% by mass or more of the resin component, more preferably 70% by mass or more, still more preferably 80% by mass or more, and particularly preferably 90% by mass or more.

The solid joining agent contains, as a main component, an amorphous thermoplastic resin which is at least one of a thermoplastic epoxy resin and a phenoxy resin. The epoxy equivalent of the amorphous thermoplastic resin is 1,600 g/eq. or more, or the amorphous thermoplastic resin does not contain an epoxy group, and the heat of fusion of the amorphous thermoplastic resin is 15 J/g or less.

The amorphous thermoplastic resin in the present embodiment means a resin having a heat of fusion of 15 J/g or less in measurement using a differential scanning calorimeter (DSC). However, this includes a case where the endothermic peak due to melting is equal to or less than the detection limit or equal to or less than noise and cannot be differentiated.

The heat of fusion is calculated from the area of the endothermic peak of DSC (Differential Scanning Calorimeter) and the weight of the thermoplastic resin component. When an inorganic filler or the like is contained in the film, the heat of fusion is calculated from the weight of the thermoplastic resin component excluding the inorganic filler. To be specific, 2 to 10 mg of a sample is weighed, placed in an aluminum pan, and heated from 23°C to 200°C or higher at 10°C/min using a DSC (DSC8231, manufactured by Rigaku Corporation) to obtain a DSC curve, and then calculated from the area of the endothermic peak at the time of melting obtained from the DSC curve and the aforementioned weighed value.

From the viewpoint of sufficiently imparting the characteristics of the amorphous thermoplastic resin to the solid joining agent, the content of the amorphous thermoplastic resin is preferably 60% by mass or more, more preferably 70% by mass or more, still more preferably 80% by mass or more, and most preferably 90% by mass or more of the resin components in the solid joining agent.

The heat of fusion of the amorphous thermoplastic resin is 15 J/g or less, preferably 11 J/g or less, more preferably 7 J/g or less, and still more preferably 4 J/g or less, and the endothermic peak is most preferably equal to or less than the detection limit.

The epoxy equivalent of the amorphous thermoplastic resin is 1,600 g/eq. or more, preferably 2,000 g/eq. or more, more preferably 5,000 g/eq. or more, and still more preferably 9,000 g/eq. or more, and it is most preferable that the epoxy equivalent is above the detection limit and the epoxy group is not substantially detected. The expression "the epoxy equivalent is above the detection limit" means that the epoxy group is not detected when the epoxy equivalent is measured based on JIS K 7236:2001 described later.

A solid joining agent which contains an amorphous thermoplastic resin, which is at least one of a thermoplastic epoxy resin and a phenoxy resin, as a main component, in which the amorphous thermoplastic resin has an epoxy equivalent of 1,600 g/eq. or more, or the amorphous thermoplastic resin does not contain an epoxy group, and the amorphous thermoplastic resin has a heat of fusion of 15 J/g or less, does not rapidly decrease in viscosity during heating as seen in conventional hot-melt adhesives, and does not reach a state of low viscosity (0.001 to 100 Pa s) even in a high-temperature region exceeding 200°C. Therefore, the solid joining agent does not flow out even in a molten state, the thickness of the joining layer can be stably ensured, and a high joining force can be stably obtained.

The epoxy equivalent (the weight of the thermoplastic resin containing 1 mol of epoxy group) referred to herein is a value of the epoxy equivalent of the thermoplastic epoxy resin or phenoxy resin contained in the film before joining, and is a value (unit "g/eq.") measured by a method specified in JIS K 7236:2001. Specifically, a brominated tetraethylammonium acetic acid solution is added using a potentiometric titrator, a 0.1 mol/L perchloric acid-acetic acid solution is used, and a numerical value as a solid content conversion value from non-volatile matter is calculated for a solvent diluted product (resin varnish). In the case of a mixture of two or more kinds of resins, it is also possible to calculate from the content of each resin and the epoxy equivalent.

In a case where the amorphous thermoplastic resin as the main component of the solid joining agent has a melting point, the melting point is preferably 50°C to 400°C, more preferably 60°C to 350°C, and still more preferably 70°C to 300°C. When the melting point is in the range of 50°C to 400°C, the film is efficiently deformed and melted by heating and effectively wets and spreads on the joined surface, so that high joining force can be obtained.

The solid joining agent may be produced in advance in the form of a film, a rod, a pellet, a powder, or the like, and then used for the production of a joined body. The solid joining agent may be formed by reacting components capable of becoming a solid joining agent on at least one surface of the base material A and the base material B. In a second embodiment described later, the solid joining agent may be formed by reacting components capable of becoming a solid joining agent on at least one surface of the base material A and the base material B, and then melting and joining the components.

The conventional heat-curable adhesive has problems that it is difficult to disassemble the joined body, it is difficult to separate and recycle different kinds of materials constituting the joined body (i.e., poor in recycling property), and it is difficult to reattach the joined body when the joining portion is displaced in the production process of the joined body or when the contents or the adherend has a defect and needs to be replaced (i.e., poor in repairing property), thus lacking convenience. However, the solid joining agent can be softened and melted by heat and can be easily peeled off, so it has excellent recycling property. In addition, since the solid joining agent is thermoplastic, it can be reversibly softened, melted, and cured repeatedly, and is also excellent in repairing property.

### «Thermoplastic Epoxy Resin»

The thermoplastic epoxy resin is preferably a polymer of (a) a bifunctional epoxy resin monomer or oligomer and (b) a bifunctional compound having two identical or different functional groups selected from the group consisting of a phenolic hydroxy group, a carboxy group, a mercapto group, an isocyanate group, and a cyanate ester group.

By using such a compound, the polymerization reaction for forming a linear polymer preferentially proceeds, and a thermoplastic epoxy resin having desired properties can be obtained.

The bifunctional epoxy resin monomer or oligomer (a) refers to an epoxy resin monomer or oligomer having two epoxy groups in the molecules.

Specific examples of (a) include, for example, bisphenol A type epoxy resins, bisphenol F type epoxy resins, difunctional phenol novolac type epoxy resins, bisphenol AD type epoxy resins, biphenyl type epoxy resins, difunctional naphthalene type epoxy resins, difunctional alicyclic epoxy resins, difunctional glycidyl ester type epoxy resins (e.g., diglycidyl phthalate, diglycidyl tetrahydrophthalate, dimer acid diglycidyl ester, etc.), difunctional glycidyl amine type epoxy resins (e.g., diglycidyl aniline, diglycidyl toluidine, etc.), difunctional heterocyclic epoxy resins, difunctional diaryl sulfone type epoxy resins, hydroquinone type epoxy resins (e.g., hydroquinone diglycidyl ether, 2,5-di-tert-butylhydroquinone diglycidyl ether, resorcin diglycidyl ether, etc.), difunctional alkylene glycidyl ether-based compounds (e.g., butanediol diglycidyl ether, butenediol diglycidyl ether, butynediol diglycidyl ether, etc.), difunctional glycidyl group-containing hydantoin compounds (e.g., 1,3-diglycidyl-5,5-dialkylhydantoin, 1-glycidyl-3-(glycidoxyalkyl)-5,5-dialkylhydantoin, etc.), difunctional glycidyl group-containing siloxanes (e.g., 1,3-bis(3-glycidoxypropyl)-1,1,3,3-tetramethyldisiloxane, α,β-bis(3-glycidoxypropyl)polydimethylsiloxane, etc.), and modified products thereof. Among these, a bisphenol A type epoxy resin, a bisphenol F type epoxy resin, and a biphenyl type epoxy resin are preferable from the viewpoint of reactivity and workability.

Examples of the bifunctional compound having a phenolic hydroxy group (b) include mononuclear aromatic dihydroxy compounds having one benzene ring such as catechol, resorcin, and hydroquinone; bisphenols such as bis(4-hydroxyphenyl)propane (bisphenol A), bis(4-hydroxyphenyl)methane (bisphenol F), and bis(4-hydroxyphenyl)ethane (bisphenol AD); compounds having a condensed ring such as dihydroxynaphthalene; bifunctional phenol compounds having an allyl group introduced therein, such as diallylresorcin, diallylbisphenol A, and triallyldihydroxybiphenyl; and dibutylbisphenol A.

Specific examples of the carboxy group-containing compound (b) include adipic acid, succinic acid, malonic acid, cyclohexanedicarboxylic acid, phthalic acid, isophthalic acid, and terephthalic acid.

Examples of the bifunctional compound having a mercapto group (b) include ethylene glycol bisthioglycolate and ethylene glycol bisthiopropionate.

Specific examples of the bifunctional compound having an isocyanate group (b) include diphenylmethane diisocyanate (MDI), isophorone diisocyanate (IPDI), hexamethylene diisocyanate (HMDI), and tolylene diisocyanate (TDI).

Specific examples of the bifunctional compound having a cyanate ester group (b) include 2,2-bis(4-cyanatophenyl)propane, 1,1-bis(4-cyanatophenyl)ethane, and bis(4-cyanatophenyl)methane.

Among the above (b), a bifunctional compound having a phenolic hydroxy group is preferred from the viewpoint of obtaining a polymer having thermoplasticity, a bifunctional compound having two phenolic hydroxy groups and having a bisphenol structure or a biphenyl structure is preferred from the viewpoint of heat resistance and joining property, and bisphenol A, bisphenol F or bisphenol S is preferred from the viewpoint of heat resistance and cost.

When (a) is a bisphenol A type epoxy resin, a bisphenol F type epoxy resin, a bisphenol S type epoxy resin, or a biphenyl type epoxy resin and (b) is bisphenol A, bisphenol F, or bisphenol S, the polymer obtained by polymerization of (a) and (b) has a structure in which a paraphenylene structure and an ether bond are used as a main skeleton, a main chain formed by connecting them with an alkylene group, and a hydroxy group generated by polyaddition are arranged in a side chain.

The linear structure composed of the paraphenylene skeleton can increase the mechanical strength of the polymer after polymerization, and the arranged hydroxy group in the side chain can improve the adhesion to the base materials. As a result, high joining strength can be realized while maintaining the workability of the thermosetting resin. Further, in the case of a thermoplastic resin, the resin can be recycled and repaired by softening and melting the resin by heat, and the recycling property and the repairing property which are problems in a thermosetting resin can be improved.

### <<Phenoxy Resin>>

The phenoxy resin is a polyhydroxy polyether synthesized from bisphenols and epichlorohydrin, and has thermoplasticity. For the production of the phenoxy resin, a method by a direct reaction of a dihydric phenol and epichlorohydrin, and a method by an addition polymerization reaction of a diglycidyl ether of a dihydric phenol and a dihydric phenol are known, and the phenoxy resin used in the present invention may be obtained by any production method. In the case of the direct reaction between a dihydric phenol and epichlorohydrin, examples of the dihydric phenol include phenols such as bisphenol A, bisphenol F, bisphenol S, biphenol, biphenylene diol, and fluorene diphenyl; and aliphatic glycols such as ethylene glycol, propylene glycol, and diethylene glycol. Among them, bisphenol A, bisphenol F, and bisphenol S are preferable from the viewpoints of cost, joining property, viscosity, and heat resistance. One kind thereof may be used singly, or two or more kinds thereof may be used in combination.

The phenoxy resin has a chemical structure similar to that of an epoxy resin and has a structure in which a para-phenylene structure and an ether bond are used as a main skeleton, a main chain connecting them, and a hydroxy group is disposed in a side chain.

### «Physical Properties of Thermoplastic Epoxy Resin and Phenoxy Resin»

The thermoplastic epoxy resin and phenoxy resin preferably have a weight average molecular weight of 10,000 to 500,000, more preferably 18,000 to 300,000, and still more preferably 20,000 to 200,000, which is a value in terms of polystyrene as measured by gel permeation chromatography (GPC). The weight average molecular weight is calculated from an elution peak position detected by GPC, and is a value of a molecular weight in terms of standard polystyrene. When the weight average molecular weight is in the range of this value, the balance between the thermoplasticity and the heat resistance is good, the joined body is efficiently obtained by melting, and the heat resistance thereof is increased. When the weight average molecular weight is 10,000 or more, the heat resistance is excellent, and when it is 500,000 or less, the viscosity at the time of melting is low, and the joining property is increased.

### «Components other than Resin Components in Solid Joining Agent»

If necessary, the solid joining agent may or may not contain fillers or additives as components other than the resin components within a range that does not hinder the object of the present invention.

Examples of the filler include an inorganic filler and an organic filler (resin powder).

Examples of the inorganic filler include spherical fused silica, metal powder of metal such as iron, silica sand, talc, calcium carbonate, mica, acid clay, diatomaceous earth, kaolin, quartz, titanium oxide, silica, phenol resin microballoons, and glass balloons.

In a case where the film contains a filler, the content of the filler in 100% by volume of the total amount of the film is preferably 50% by volume or less, more preferably 30% by volume or less, still more preferably 20% by volume or less, and most preferably 10% by volume or less. The volume of the filler can be obtained by dividing the weight of the filler contained in the film by the true specific gravity of the filler.

The content of the resin component in 100% by volume of the total amount of the film is preferably 10% by volume or more, more preferably 20% by volume or more, still more preferably 30% by volume or more, and even more preferably 50% by volume or more, and in one embodiment, 80% by volume or more, in another embodiment, 90% by volume or more, and in another embodiment, 99% by volume or more.

Examples of the additive include a defoaming agent, a coupling agent such as a silane coupling agent, and a pigment, and one or two or more of these may be contained.

The content of the additives in the solid joining agent is preferably 10% by mass or less, more preferably 5% by mass or less, and still more preferably 1% by mass or less.

The content of the resin component in the solid joining agent is preferably 10% by mass or more, more preferably 20% by volume or more, still more preferably 30% by volume or more, and even more preferably 50% by mass or more, and in one embodiment, 80% by mass or more, in another embodiment, 90% by mass or more, and in another embodiment, 99% by mass or more.

### «Form of Solid Joining Agent»

The form of the solid joining agent before melting (before joining) is not particularly limited, but it preferably has any form selected from the group consisting of films, rods, pellets, and powders, and is more preferably a film that is a sheet-shaped material having a thickness of 10 µm to 3 mm.

The thickness of the solid joining agent is not particularly limited, but from the viewpoint of obtaining a joined body having excellent joining property in a short joining process time, the thickness is preferably 1 mm or less, more preferably 0.5 mm or less, still more preferably 0.3 mm or less, even more preferably 0.2 mm or less, and most preferably 0.1 mm or less.

The solid joining agent may have tackiness as long as the joining force and the heat resistance thereof are not impaired.

### <<Production Method of Solid Joined Body>>

The method for producing the solid joining agent is not particularly limited, but a film-shaped solid joining agent can be obtained by heating or heating and compressing the resin composition.

For example, a film-shaped solid joining agent containing at least one selected from the aforementioned thermoplastic epoxy resin and the aforementioned phenoxy resin can be produced by heating and polymerizing one or two or more of the raw material monomers and raw material oligomers of the aforementioned thermoplastic epoxy resin and the aforementioned phenoxy resin and, if necessary, a catalyst. At the time of the polymerization, a solvent may be added to reduce the viscosity and facilitate stirring. In the case of adding a solvent, it is necessary to remove the solvent, and a solid joining agent may be obtained by performing drying or polymerization or both on a release film or the like.

As the catalyst, for example, a tertiary amine such as triethylamine and 2,4,6-tris(dimethylaminomethyl)phenol; a phosphorus-based compound such as triphenylphosphine; and the like are suitably used. Among these, triphenylphosphine is preferable from the viewpoint of stability.

Examples of the solvent include acetone, methyl isobutyl ketone, cyclohexanone, methyl ethyl ketone, xylene, n-butanol, toluene, propylene glycol monomethyl ether acetate, isopropanol, water, and butyl cellosolve. Cyclohexanone and methyl ethyl ketone are preferable from the viewpoint of solubility and boiling point.

Examples of a method of thermally compressing the resin composition include a compression method with a heated press (hot press) or the like.

A temperature of the hot press is preferably 120°C to 250°C, more preferably 130°C to 200°C, and further preferably 140°C to 180°C.

In addition, a compression time in compressing the resin composition with a hot press is preferably 0.5 to 4 hours, more preferably 0.5 to 3 hours, and further preferably 0.5 to 2 hours.

### (Joining Step (1))

The joining step (1) is a step of joining the base material A and the base material B to each other by pressurizing the base material A and the base material B via the solid joining agent in a state in which the temperature of the joining surface of at least one of the base material A, the solid joining agent, and the base material B is raised to the melting point thereof or higher.

In a state in which the temperature of the joining surface of at least one of the base material A, the solid joining agent, and the base material B is raised to the melting point thereof or higher, the base material A and the base material B are pressurized via the solid joining agent, whereby the dimensional errors of the base material A and the base material B can be absorbed, and as a result, a joined body having a desired dimension can be obtained.

In the joining step (1), the joining surface of at least one of the base material A, the solid joining agent, and the base material B may be heated to a temperature higher than the melting point thereof, and the base material A may be heated, the solid joining agent may be heated, and the base material B may be heated. From the viewpoint of joining property, it is preferable to heat the base material A, the solid joining agent, and the base material B, respectively.

The heating method is not particularly limited, and examples thereof include a heating method by warm air heating, hot press, radiant heat heating, hot plate welding, ultrasonic welding, vibration welding, and high-frequency induction welding. Among these, from the viewpoint of maintaining the overall shape of the joined body and obtaining a joined body having a desired dimension, it is preferable to heat the surface of the base material instantaneously and locally, and it is preferable to heat by radiant heat heating.

The temperature of the joining surface of at least any one of the base material A, the solid joining agent, and the base material B in the joining step (1) may be a temperature equal to or higher than the melting point thereof, but from the viewpoint of further absorbing dimensional errors, the temperature is 0°C or higher and 200°C or lower, more preferably 20°C or higher and 150°C or lower, and still more preferably 50°C or higher and 100°C or lower than the melting point.

In one embodiment of the present disclosure, in the joining step (1), the temperature of the joining surface of at least one of the base material A, the solid joining agent, and the base material B is preferably equal to or higher than the melting point of the base material A.

In another embodiment of the present disclosure, in the joining step (1), the temperature of the joining surface of at least one of the base material A, the solid joining agent, and the base material B is preferably equal to or higher than the melting point of the base material B.

In the joining step (1), the temperature of the joining surface of the base material A (the joining surface with the solid joining agent) is preferably 100°C to 400°C, more preferably 120°C to 350°C, and still more preferably 150°C to 300°C, from the viewpoint of maintaining the overall shape of the joined body and obtaining a joined body having a desired dimension.

In the joining step (1), the temperature of the joining surface of the solid joining agent (the joining surface with the base material A and/or the joining surface with the base material B) is preferably 100 to 400°C, more preferably 120 to 350°C, and still more preferably 150 to 300°C. By heating to 100 to 400°C, the solid joining agent is efficiently deformed and melted and effectively wets and spreads on the joining surface, so that a high joining force can be obtained and the dimensional error of the base material can be further absorbed.

The temperature of the joining surface of the base material B (the joining surface with the solid joining agent) in the joining step (1) is preferably 100°C to 400°C, more preferably 120°C to 350°C, and still more preferably 150°C to 300°C, from the viewpoint of joining property.

The pressurizing force at the time of pressurization is not particularly limited, but is preferably 0.01 to 20 MPa, more preferably 0.1 to 10 MPa, and still more preferably 0.2 to 5 MPa from the viewpoint of absorbing the dimensional error of the base material.

The pressurizing time at the time of pressurization is not particularly limited, but is preferably 0.1 to 20 minutes, more preferably 0.3 to 10 minutes, and still more preferably 0.5 to 5 minutes from the viewpoint of absorbing the dimensional error of the base material.

At the time of pressurization, the base material A and the base material B may be pressurized using a mold. By using a mold, heating and pressurization are uniformly performed on the multilayer body, deformation of the base material A or B heated to a temperature equal to or higher than the softening point can be controlled, and a joined body having a more desired dimension is easily obtained. In addition, if the base material A and the base material B are brought into contact with each other in a state in which the mold is heated, the base material A and the base material B can be heated quickly and efficiently.

It is preferable that the mold has a shape capable of fixing the base material A and the base material B so as to form a desired joined body, and in particular, it is preferable that the mold has a structure capable of bringing the mold into contact with and pressurizing the surface opposite to or the vicinity of the joining surface of the base material A and the base material B. With such a shape, the joining surface is efficiently pressurized, a dimensional error of the base material A and/or the base material B is easily absorbed, and a joined body having a high bonding force is easily obtained.

### <Second Embodiment>

The method for producing a joined body according to the second embodiment of the present invention is a method for producing a joined body obtained by joining a base material A, a solid joining agent containing an amorphous thermoplastic resin, which is at least one of a thermoplastic epoxy resin and a phenoxy resin, as a main component, and a base material B in this order, in which at least the base material A is a thermoplastic resin base material, an epoxy equivalent of the amorphous thermoplastic resin is 1,600 g/eq. or more or the amorphous thermoplastic resin does not contain an epoxy group, and a heat of fusion of the amorphous thermoplastic resin is 15 J/g or less, and the method includes: a joining step (2-1) of joining at least one of the base material A and the base material B to the solid joining agent in a state in which a temperature of the joining surface of at least one of the base materials and the solid joining agent is raised to the melting point thereof or higher; and a joining step (2-2) of joining the base material A and the base material B by pressurizing the base material A and the base material B via the solid joining agent in a state in which a temperature of the joining surface of at least one of the base material A and the base material B is raised to the softening point thereof or higher.

According to the method for producing a joined body according to the second embodiment, the open time can be increased for the same reason as in the method for producing a joined body according to the first embodiment, and different kinds of materials can be joined with a higher joining force than that of the conventional crystalline hot-melt adhesive.

The method for producing a joined body according to the second embodiment has a joining step (2-1) and a joining step (2-2). By including such a step, it is possible to adjust the shape of the joined body and absorb the dimensional errors of the base material A and the base material B, and as a result, a joined body having a desired dimension can be obtained.

In the second embodiment, the "joining surface of at least one of the base material and the solid joining agent" specifically means at least one of a joining surface of the base material (the base material A and/or the base material B) to be joined to the solid joining agent with the solid joining agent and a joining surface of the solid joining agent with the base material to be joined to the solid joining agent.

Further, the "state in which the temperature of the joining surface is raised to the melting point thereof or higher" means a state in which the temperature is raised to the melting point or higher of the solid joining agent on the joining surface of the solid joining agent with the base material (the base material A and/or the base material B) to be joined to the solid joining agent, and a state in which the temperature is raised to the melting point or higher of the base material on the joining surface of the base material with the solid joining agent to be joined the base material.

In addition, "the temperature of the joining surface of at least one of the base material A and the base material B" specifically represents the temperature of at least one selected from the joining surface of the base material A with the solid joining agent and the joining surface of the base material B with the solid joining agent.

In addition, the "state in which the temperature of the joining surface is raised to the softening point thereof or higher" means a state in which the temperature is raised to the softening point or higher of the base material A on the joining surface of the base material A with the solid joining agent, and a state in which the temperature is raised to the softening point or higher of the base material B on the joining surface of the base material B with the solid joining agent.

### (Joining Step (2-1))

The joining step (2-1) is a step of joining the base material of at least one of the base material A and the base material B and the solid joining agent in a state in which the temperature of the joining surface of at least one of the base material and the solid joining agent is raised to the melting point thereof or higher.

Specifically, the joining step (2-1) is a step of joining the solid joining agent to at least one of the base material A and the base material B by melting the solid joining agent in a state in which the temperature of the joining surface of at least one of the base material and the solid joining agent is raised to the melting point thereof or higher.

In the joining step (2-1), at least one of the base material A and the base material B and the solid joining agent are joined in advance, whereby the base material A and the base material B can be joined more accurately, and a joined body having excellent joining property can be obtained.

In the joining step (2-1), the solid joining agent may be joined to one of the base material A and the base material B, or the solid joining agent may be joined to each of the base material A and the base material B.

From the viewpoint of obtaining a joined body having more excellent joining property, the solid joining agent is preferably joined to a base material which is a resin, and more preferably joined to a thermoplastic resin base material. That is, when the base material B is not a resin, it is preferable to join a solid joining agent to the base material A; when the base material B is a resin but not a thermoplastic resin, it is preferable to join a solid joining agent to the base material A; when the base material B is a thermoplastic resin, a solid joining agent may be joined to the base material A, and a solid joining agent may be joined to the base material B.

The method of melting the solid joining agent is not limited, and examples thereof include a method of melting by at least one selected from the group consisting of warm air heating, hot press, radiant heat heating, hot plate welding, ultrasonic welding, vibration welding, and high-frequency induction welding. Among these, infrared heating is preferable from the viewpoint of ease of production.

In the joining step (2-1), the temperature of the joining surface of at least one of the base material (at least one of the base material A and the base material B) and the solid joining agent may be a temperature equal to or higher than the melting point thereof, and is preferably a temperature of 0°C or higher and 200°C or lower, more preferably 20°C or higher and 150°C or lower, and still more preferably 50°C or higher and 100°C or lower than the melting point from the viewpoint of further absorbing dimensional errors.

In the joining step (2-1), the temperature of the joining surface of at least one of the base material (at least one of the base material A and the base material B) and the solid joining agent is preferably 100°C to 300°C, more preferably 120°C to 250°C, and still more preferably 150°C to 220°C. By heating to 100°C to 300°C, the solid joining agent is efficiently deformed and melted and effectively wets and spreads on the joining surface, whereby a high joining force is obtained.

After the joining step (2-1), the joining step (2-2) may be performed after cooling to solidify the solid joining agent, or after the joining step (2-1), the joining step (2-2) may be performed in a state where the solid joining agent is not completely solidified.

### (Joining Step (2-2))

The joining step (2-2) is a step of joining the base material A and the base material B to each other by pressurizing the base material A and the base material B via the solid joining agent in a state in which the temperature of the joining surface of at least one of the base material A and the base material B is raised to the softening point thereof or higher.

In a state in which the temperature of the joining surface of at least one of the base material A and the base material B is raised to the softening point thereof or higher, the base material A and the base material B are pressurized via the solid joining agent, whereby the dimensional errors of the base material A and the base material B can be absorbed, and as a result, a joined body having a desired dimension can be obtained.

In the joining step (2-2), the joining surface of at least one of the base material A and the base material B may be heated to a temperature higher than the softening point thereof, and the base material A may be heated, and the base material B may be heated. From the viewpoint of joining property, it is preferable to heat the base material A and the base material B, respectively. In addition, the solid joining agent may be heated.

The heating method is not particularly limited, and examples thereof include the same method as in the joining step (1), and preferable embodiments thereof are also the same.

The temperature of the joining surface of at least one of the base material A and the base material B in the joining step (2-2) may be a temperature equal to or higher than the softening point thereof, but from the viewpoint of further absorbing dimensional errors, the temperature is 0°C or higher and 200°C or lower, more preferably 20°C or higher and 150°C or lower, and still more preferably 50°C or higher and 100°C or lower than the softening point.

In the joining step (2-2), the temperature of the joining surface of the base material A (the joining surface with the solid joining agent) is preferably 100°C to 400°C, more preferably 120°C to 350°C, and still more preferably 150°C to 300°C, from the viewpoint of maintaining the overall shape of the joined body and obtaining a joined body having a desired dimension.

In the joining step (2-2), the temperature of the joining surface of the solid joining agent (the joining surface with the base material A and/or the joining surface with the base material B) is preferably 100°C to 400°C, more preferably 120°C to 350°C, and still more preferably 150°C to 300°C. By heating to 100°C to 400°C, the solid joining agent is efficiently deformed and melted and effectively wets and spreads on the joining surface, so that a high joining force can be obtained and the dimensional error of the base material can be further absorbed.

The temperature of the joining surface of the base material B (the joining surface with the solid joining agent) in the joining step (2-2) is preferably 100°C to 400°C, more preferably 120°C to 350°C, and still more preferably 150°C to 300°C, from the viewpoint of joining property.

The pressurizing force and the pressurizing time at the time of pressurization are not particularly limited, and preferable embodiments are the same as in the joining step (1).

Further, for the same reason as in the joining step (1), the base material A and the base material B may be pressurized using a mold at the time of pressurization.

### [Joined Body]

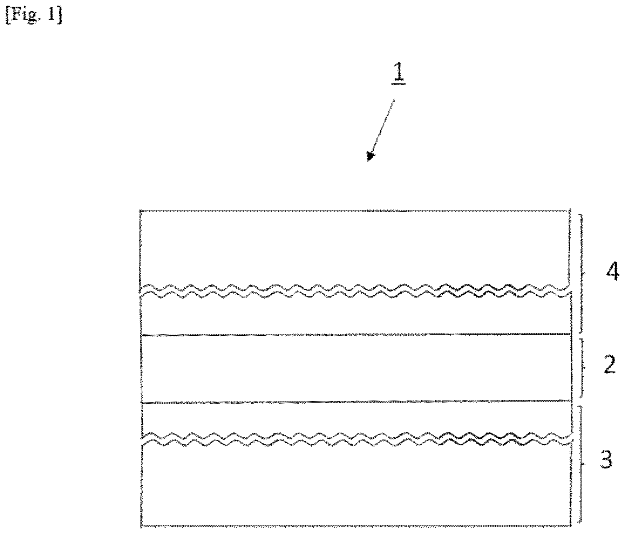

Fig. 1 shows one embodiment of the joined body of the present invention. A joined body 1 shown in Fig. 1 is obtained by integrally joining a base material A3 and a base material B4 via a joining layer 2 in which a solid joining agent made of an amorphous thermoplastic resin which is at least one of a thermoplastic epoxy resin and a phenoxy resin is melted and then solidified. The joined body of the present invention exhibits excellent joining strength even when it is a joined body of different kinds of materials. Since the joining strength is affected by many factors such as the thickness of the joining layer, the molecular weight and chemical structure of the polymer constituting the joining layer, mechanical properties, and viscoelastic properties, in addition to the strength of the interfacial interaction acting between the joining layer and the base material A and between the joining layer and the base material B, the details of the mechanism by which the joined body of the present invention exhibits excellent joining strength are not clear, but it is presumed that the main factors are that the cohesive force in the amorphous thermoplastic resin constituting the joining layer 2 is low, and that hydroxy groups exist in the amorphous thermoplastic resin to form chemical bonds and intermolecular forces such as hydrogen bonds and van der Waals forces at the interfaces between the joining layer and the base material A and between the joining layer and the base material B. However, in the above-mentioned joined body, the state or characteristic of the above-mentioned interface of the above-mentioned joined body is a very thin chemical structure at the nanometer level or less, which is difficult to analyze, and it is impossible or impractical in the present technology to express it so as to distinguish it from that not due to the use of a solid joining agent by specifying it.

The joined body of the present invention in which the joining layer is made of a thermoplastic resin is excellent in recycling property and repairing property, and can be easily disassembled into the base material A and the base material B by heating the joined body.

### (Base Material A)

The base material A is a thermoplastic resin.

Examples of the thermoplastic resin include polyolefins and acid-modified products thereof, polystyrene, polymethyl methacrylate, AS resins, ABS resins, thermoplastic aromatic polyesters such as polyethylene terephthalate and polybutylene terephthalate, polycarbonates, polyimides, polyamides, polyamideimides, polyetherimides, polyethersulfones, polyphenylene ethers and modified products thereof, polyphenylene sulfides, polyoxymethylenes, polyarylates, polyether ketones, polyether ether ketones, polyether ketone ketones, thermoplastic epoxies, and fiber reinforcing materials thereof. As the thermosetting resin, for example, one or more selected from epoxy resins, vinyl ester resins, phenol resins, urethane resins, and the like can be used. From the viewpoint of heat resistance, joining force, cost, ease of molding, and the like, it is preferably made of at least one selected from polycarbonate, glass fiber reinforced polyamide, glass fiber reinforced polybutylene terephthalate, and glass fiber reinforced polyphenylene sulfide.

The shape of the base material A is not particularly limited.

The melting point of the base material A is not particularly limited, but is preferably 100°C to 400°C, more preferably 150°C to 350°C, and still more preferably 180°C to 300°C from the viewpoint of absorbing joining force and dimensional error.

The softening point of the base material A is not particularly limited, but is preferably 100°C to 400°C, more preferably 150°C to 350°C, and still more preferably 180°C to 300°C from the viewpoint of absorbing heat resistance, joining force, and dimensional error of the joined body.

### (Base Material B)

The base material B is not particularly limited, and examples thereof include metals, inorganic substances, and resins.

Examples of the metal include aluminum, iron, copper, magnesium, and titanium.

In the present embodiment, the term "iron" is used to include iron and an alloy thereof. Examples of the alloy of iron include steel and stainless steel. Similarly, copper, aluminum, magnesium, and titanium are also used in the meaning of including these simple substances and alloys thereof.

Examples of the inorganic substance include glass, ceramic, and a carbon molded body.

Examples of the glass include, in addition to general glass, heat-resistant glass, fire resistant glass, fireproof glass, and chemically strengthened glass used for the protection of smartphones. Specific examples include soda-lime glass, lead glass, borosilicate glass, and quartz glass.

Examples of the ceramics include fine ceramics used in semiconductors, automobiles, and industrial equipment. Specific examples include oxide-based ceramics such as alumina, zirconia, and barium titanate; hydroxide-based ceramics such as hydroxyapatite; carbide-based ceramics such as silicon carbide; and nitride-based ceramics such as silicon nitride.

Examples of the resin include a thermoplastic resin, a thermosetting resin, and a fiber reinforced plastic (FRP). Among these, from the viewpoint of joining force, cost, and ease of molding, it is more preferable that the resin is made of a thermoplastic resin.

Examples of the thermoplastic resin include the same ones as those of the base material A, and from the viewpoint of heat resistance, joining force, cost, ease of molding, and the like, it is preferably made of at least one selected from polycarbonate, glass fiber reinforced polyamide, glass fiber reinforced polybutylene terephthalate, and glass fiber reinforced polyphenylene sulfide.

When the base material B is made of a resin, the melting point of the base material B is not particularly limited, but is preferably 100°C to 400°C, more preferably 150°C to 350°C, and still more preferably 180°C to 300°C from the viewpoint of absorbing joining force and dimensional error.

When the base material B is made of a resin, the softening point of the base material B is not particularly limited, but is preferably 100°C to 400°C, more preferably 150°C to 350°C, and still more preferably 180°C to 300°C from the viewpoint of absorbing joining force and dimensional error.

From the viewpoint of further exhibiting the effects of the present invention, the base material B is preferably made of at least one metal or resin, and more preferably made of a metal.

### (Pretreatment)

It is preferable that surfaces of the base material A and the base material B be both subjected to a pretreatment for the purpose of removal of contaminations on the surfaces and/or anchor effect.

Examples of the pretreatment of the base material A include an UV ozone treatment, a polishing treatment, a plasma treatment, and a corona discharge treatment.

Examples of the pretreatment of the base material B include a degreasing treatment, an UV ozone treatment, a blasting treatment, a polishing treatment, a plasma treatment, a corona discharge treatment, a laser treatment, an etching treatment, and a flame treatment.

A pretreatment for cleaning the surface of the base material or a pretreatment imparting irregularities on the surface is preferable as the pretreatment. Specifically, when the base material includes aluminum, glass, a ceramic, or iron, at least one kind selected from the group consisting of a degreasing treatment, an UV ozone treatment, a blasting treatment, a polishing treatment, a plasma treatment, and an etching treatment is preferable, and when the base material includes an FRP, a polypropylene, a polycarbonate, a polymethyl methacrylate, a polyetherimide, a polyamide, or a polybutylene terephthalate, at least one kind selected from the group consisting of a degreasing treatment, an UV ozone treatment, a blasting treatment, a polishing treatment, a plasma treatment, and a corona discharge treatment is preferable.

One kind of the pretreatment may be carried out alone, or two or more kinds thereof may be carried out. Known methods can be used as specific methods for these pretreatments.

Usually, hydroxy groups derived from a resin or a reinforcing material are considered to be present on the surface of an FRP, and hydroxy groups are considered to be intrinsically present on glass and ceramic surfaces; meanwhile, hydroxy groups are newly generated through the pretreatment, and the amount of hydroxy groups on the surface of the base material can be increased.

The degreasing treatment is a method for dissolving dirt such as fat and oil on the base material surface with, for example, an organic solvent such as acetone and toluene to remove dirt.

The UV ozone treatment is a method for cleaning and modifying a surface by the energy of ultraviolet rays with short wavelengths emitted from a low-pressure mercury lamp and the power of ozone (O₃) generated thereby. In a case of glass, the UV ozone treatment is one surface cleaning method for removing organic impurities on a surface. In general, a cleaned surface modifying device using a low-pressure mercury lamp is referred to as an "UV ozone cleaner," an "UV cleaning device," an "ultraviolet surface modifying device," and the like.

Examples of the blasting treatment include a wet blasting treatment, a shot blasting treatment, and a sandblasting treatment. Among these, a wet blasting treatment is preferable because a denser surface can be obtained as compared with a dry blasting treatment.

Examples of the polishing treatment include buffing using a polishing cloth, roll polishing using polishing paper (sandpaper), and electrolytic polishing.

The plasma treatment creates a plasma beam with a high-voltage power supply and a rod and causes the plasma beam to impinge on a material surface to excite molecules and functionalize the molecules, and includes an atmospheric pressure plasma treatment method capable of imparting hydroxy groups or polar groups onto a material surface, for example.

The corona discharge treatment includes a method applied for surface modification of a polymer film and is a method for generating hydroxy groups or polar groups on a surface, beginning at radicals generated by cutting, with electrons emitted from an electrode, polymer main chains or side chains on a polymer surface layer.

The laser treatment is a technique improving surface characteristics by rapidly heating only a surface of a base material with laser irradiation and cooling same, and is an effective method for surface coarsening. Known laser treatment techniques can be used.

Examples of the etching treatment include chemical etching treatments such as an alkali method, a phosphoric acid-sulfuric acid method, a fluoride method, a chromic acid-sulfuric acid method, and a salt iron method, and electrochemical etching treatments such as an electrolytic etching method.

The flame treatment is a method combusting a mixed gas of a combustion gas and air to generate plasma from oxygen in the air and trying to make a surface hydrophilic by imparting the oxygen plasma to an object to be treated. Known flame treatment techniques can be used.

### Examples

Next, specific examples of the present invention will be described, but the present invention is not particularly limited to these Examples.

### [Joining Base Material]

The following base materials were used as joining base materials (base material A and base material B).

### «PBT (Polybutylene Terephthalate)»

A test piece (melting point: 225°C, softening point: 207°C) having a width of 18 m, a length of 45 mm, and a thickness of 1.5 mm was obtained by injection-molding 420-1001 manufactured by SABIC. The test piece was used without surface treatment.

### «Aluminum»

The surface of A6061-T6 was subjected to blasting treatment to obtain a test piece having a width of 18 mm, a length of 45 mm, and a thickness of 1.6 mm.

### [Production of Solid Joining Agent]

### <Production Example 1>

Into a reaction device equipped with a stirrer, a reflux condenser, a gas introduction tube, and a thermometer, were put 1.0 equivalent (203 g) of jER (registered trademark) 1007 (manufactured by Mitsubishi Chemical Corporation, bisphenol A-type epoxy resin, weight average molecular weight: about 10,000), 1.0 equivalent (12.5 g) of bisphenol S, 2.4 g of triphenylphosphine, and 1,000 g of methyl ethyl ketone, and the temperature was increased to 100°C while stirring in a nitrogen atmosphere. Completion of dissolution was visually confirmed, and the solution was cooled to 40°C to obtain a thermoplastic epoxy resin composition having a solid content of about 20% by mass. The solvent was removed from this to obtain a thermoplastic epoxy resin as a solid component. Non-adhesive fluororesin films (NITOFLON (registered trademark) No. 900UL, manufactured by Nitto Denko Corporation) were placed on an upper plate and a lower plate of a pressing machine, the thermoplastic epoxy resin was placed on the non-adhesive fluororesin film of the lower plate, the press machine was heated to 160°C, and the thermoplastic epoxy resin was heated and compressed for 2 hours to obtain a solid joining agent A-1 having a solid content of 100% by mass and a thickness of 100 µm. The measurement results of the weight average molecular weight, the epoxy equivalent, and the heat of fusion of the obtained solid joining agent A-1 are as shown in Table 1. The weight average molecular weight was measured by dissolving the obtained solid joining agent in tetrahydrofuran.

In addition, the same measurement was performed on a solid joining agent and a joining agent obtained by other Production Examples described later, and the results are also shown in Table 1.

### <Production Example 2>

Into a reaction device equipped with a stirrer, a reflux condenser, a gas introduction tube, and a thermometer, 20 g of Phenotohto (registered trademark) YP-50S (manufactured by NIPPON STEEL Chemical & Material Co., Ltd., phenoxy resin, weight average molecular weight: about 50,000) and 80 g of cyclohexanone were charged, the temperature was raised to 60°C while stirring, completion of dissolution was visually confirmed, and the temperature was cooled to 40°C, thereby obtaining a resin composition having a solid content of 20% by mass. The solvent was removed from this to obtain a film-shaped solid joining agent A-2 having a solid content of 100% by mass and having a length of 5 mm × a width of 10 mm × a thickness of 100 µm.

### <Production Example 3>

The resin composition P-2 and a crystalline epoxy resin YSLV-80XY (manufactured by NIPPON STEEL Chemical & Material Co., Ltd.) were mixed at a mass ratio of 98:2, pressed, and cut to obtain a solid joining agent A-3 having a length of 5 mm × a width of 10 mm × a thickness of 100 µm.

### <Production Example 4>

The solid joining agent A-2 and a crystalline epoxy resin YSLV-80XY (manufactured by NIPPON STEEL Chemical & Material Co., Ltd.) were pulverized and mixed at a mass ratio of 94:6, pressed in a vise, and heated to 50°C, thereby obtaining a solid joining agent A-4 having a solid content of 100% by mass and having a length of 5 mm × a width of 10 mm × a thickness of 100 µm.

### <Production Example 5>

The resin composition A-2 and a crystalline epoxy resin YSLV-80XY (manufactured by NIPPON STEEL Chemical & Material Co., Ltd.) were pulverized and mixed at a mass ratio of 89:11, pressed in a vise, and heated to 50°C, thereby obtaining a solid joining agent A-5 having a solid content of 100% by mass and having a length of 5 mm × a width of 10 mm × a thickness of 100 µm.

### <Production Example 6>

Into a reaction device equipped with a stirrer, a reflux condenser, a gas introduction tube, and a thermometer, were put 1.0 equivalent (203 g) of jER (registered trademark) 1007 (manufactured by Mitsubishi Chemical Corporation, bisphenol A-type epoxy resin, molecular weight: about 4,060), 0.6 equivalents (12.5 g) of bisphenol S (molecular weight: 250), 2.4 g of triphenylphosphine, and 1,000 g of methyl ethyl ketone, and the temperature was increased to 100°C while stirring in a nitrogen atmosphere. Completion of dissolution was visually confirmed, and the solution was cooled to 40°C to obtain a thermoplastic epoxy resin composition having a solid content of about 20% by mass. The solvent was removed from this to obtain a thermoplastic epoxy resin as a solid component. Non-adhesive fluororesin films (NITOFLON (registered trademark) No. 900UL, manufactured by Nitto Denko Corporation) were placed on an upper plate and a lower plate of a pressing machine, the thermoplastic epoxy resin was placed on the non-adhesive fluororesin film of the lower plate, the press machine was heated to 160°C, and the thermoplastic epoxy resin was heated and compressed for 2 hours to obtain a film-shaped solid joining agent A-6 having a solid content of 100% by mass and a thickness of 100 µm.

### <Production Example 7>

A flask was charged with 1.0 equivalent (203 g) of jER (registered trademark) 1007 (manufactured by Mitsubishi Chemical Corporation, bisphenol A-type epoxy resin, weight average molecular weight: about 10,000), 1.0 equivalent (12.5 g) of bisphenol S, 2.4 g of triphenylphosphine, and 1,000 g of methyl ethyl ketone, and the mixture was stirred at ordinary temperature to obtain a liquid resin composition having a solid content of about 20% by mass. The liquid resin composition was applied to the aluminum base material by bar coating application, dried at room temperature for 30 minutes, and then left to stand in an oven at 160°C for 2 hours to form a solid thermoplastic epoxy resin polymer coating layer having a length of 5 mm × a width of 10 mm × a thickness of 100 µm on the surface of the aluminum base material. The coating layer was designated as a joining agent A-7.

### <Production Example 8>

Into a reaction device equipped with a stirrer, a reflux condenser, a gas introduction tube, and a thermometer, 20 g of Phenotohto (registered trademark) YP-50S (manufactured by NIPPON STEEL Chemical & Material Co., Ltd., phenoxy resin, weight average molecular weight: about 50,000) and 80 g of cyclohexanone were charged, the temperature was raised to 60°C while stirring, completion of dissolution was visually confirmed, and the temperature was cooled to 40°C, thereby obtaining a liquid resin composition having a solid content of 20% by mass. The liquid resin composition was applied to the aluminum base material by bar coating application and left to stand in an oven at 70°C for 30 minutes to form a phenoxy resin coating layer having a length of 5 mm × a width of 10 mm × a thickness of 100 µm on the surface of the aluminum base material. The coating layer was designated as a joining agent A-8.

### <Comparative Production Example 1>

Two liquids of a heat-curable liquid epoxy adhesive E-250 (manufactured by Konishi Co., Ltd., a two liquid type of a bisphenol-type epoxy and an amine curing agent) were mixed, applied to a release film, cured at 100°C for 1 hour, cooled, and peeled off from the release film to obtain a film B-1 having a thickness of 100 µm.

In the film B-1, no heat of fusion peak was detected by DSC measurement, and the epoxy equivalent and the weight average molecular weight could not be measured because the film was insoluble in a solvent.

### <Comparative Production Example 2>

An amorphous polycarbonate film (Iupilon (registered trademark) FE2000, manufactured by Mitsubishi Engineering-Plastics Corporation, thickness: 100 µm) was cut to obtain a film B-2.

In the film B-2, no heat of fusion peak was detected by DSC measurement, and the epoxy equivalent and the weight average molecular weight could not be measured because the film was insoluble in a solvent.

### <Comparative Production Example 3>

A crystalline epoxy resin YSLV-80XY (manufactured by NIPPON STEEL Chemical & Material Co., Ltd) was pressed to obtain a sheet, and then the sheet was cut to obtain a film B-3 having a thickness of 100 µm.

### <Comparative Production Example 4>

A heat-curable liquid epoxy adhesive E-250 (manufactured by Konishi Co., Ltd., a two liquid type of a bisphenol-type epoxy and an amine curing agent) was directly used as a liquid joining agent B-4.

In the joining agent B-4, no heat of fusion peak was detected by DSC measurement, and the epoxy equivalent and the weight average molecular weight could not be measured because the liquid joining agent B-4 was insoluble in a solvent.

### <Comparative Production Example 5>

A crystalline polyamide-based hot-melt adhesive film NT-120 (manufactured by Nihon Matai Co., Ltd., thickness: 100 µm) was cut to obtain a film B-5 having a thickness of 100 µm.

In the film B-5, the epoxy equivalent and the weight average molecular weight could not be measured because the film was insoluble in a solvent.

### <Evaluation Method of Solid Joining Agent and Joining Agent>

The weight average molecular weight, the heat of fusion, and the epoxy equivalent of the solid joining agent and the joining agent were each determined as follows. In addition, the thickness of the solid joining agent was measured by the following method.

### (Weight Average Molecular Weight)

Each of the solid joining agent and the joining agent was dissolved in tetrahydrofuran and measured under the following conditions using Prominence 501 (manufactured by SHOWA SCIENCE CO., LTD., Detector: Shodex (registered trademark) RI-501 (manufactured by Showa Denko K.K.)).
Column: two columns LF-804 manufactured by Showa Denko K.K.
Column temperature: 40°C
Sample: 0.4% by mass tetrahydrofuran solution of resin
Flow rate: 1 mL/minute
Eluting solution: tetrahydrofuran
Calibration method: standard polystyrene equivalent

### (Heat of Fusion and Melting Point)

Each of the solid joining agent and the joining agent was weighed in an amount of 2 to 10 mg, placed in an aluminum pan, and heated from 23°C to 200°C at a rate of 10°C/min by DSC (DSC8231, manufactured by Rigaku Corporation) to obtain a DSC curve. The heat of fusion was calculated from the area of the endothermic peak at the time of melting in the DSC curve and the weighed value. The endothermic peak temperature of the obtained DSC curve was taken as the melting point. In the case where an endothermic peak is not obtained or the heat of fusion is 15 J/g or less, a temperature obtained by adding 70°C to the glass transition point was taken as the melting point. The glass transition point was defined as a temperature at the start of the drop in a DSC curve in a second cycle in which the temperature is raised to 200°C, then cooled to 40°C or lower, and then heated to 200°C in DSC. For thermosetting resins that do not melt by heating, the melting point was set to none.

### (Epoxy Equivalent)

The epoxy equivalent was measured in accordance with JIS K 7236:2001 and converted into a value as a resin solid content. In the case of a simple mixture that does not involve a reaction, the epoxy equivalent was calculated from each epoxy equivalent and content.

### (Thickness of Solid Joining Agent)

The thickness of the solid joining agent was measured using MDC-25MX manufactured by Mitutoyo Corporation after being left in an atmosphere with humidity of 50% at 23°C for 24 hours.

### [Production of Joined body]

### <Example 1>

The solid joining agent P-1 cut into a size of 10 × 15mm was disposed on the PBT base material as the base material A, and the solid joining agent was heated using an infrared heater (manufactured by TRP Thermal Engineering) so that the temperature of the solid joining agent became 270°C to melt the solid joining agent, thereby joining the base material A and the solid joining agent.

Subsequently, the base material B (the aluminum) was disposed on a mold heated to 210°C so that one surface of the base material B was in contact with the mold, and then the solid joining agent A-1 was disposed on the surface of the base material B opposite to the mold so as to be in contact with the surface of the base material B. Next, the base material A was disposed so as to be in contact with the surface of the solid joining agent A-1 opposite to the surface in contact with the base material B, a mold heated to 210°C was disposed so as to be in contact with the base material A, pressed at a pressure of 0.1 MPa for 1 minute, and then allowed to cool, thereby obtaining a joined body. The base materials were overlapped with each other with a width of 10 mm and a depth of 5 mm. The solid joining agent A-1 was disposed so as to cover all the overlapped regions of the base materials. That is, the base material A and the base material B were disposed so as not to be in direct contact with each other and so that the solid joining agent was interposed therebetween.

For open time evaluation, a joined body was produced in the same manner as above except that the solid joining agent was joined onto the PBT base material (base material A) and allowed to stand for 3 days, and then the base material A and the base material B were joined.

### <Examples 2 to 8, Comparative Examples 1 to 3, and Comparative Example 5>

Each joined body was obtained in the same manner as in Example 1 except that each of the solid joining agents A-2 to A-8, B-1 to B-3, and B-5 shown in Table 1 was used as the solid joining agent.

### <Example 9>

A joined body was obtained in the same manner as in Example 1 except that the base material A and the solid joining agent were joined to each other at a heating temperature of 210°C by the infrared heater.

### <Comparative Example 4>

As a joining agent, a heat-curable liquid epoxy adhesive E-250 (manufactured by Konishi Co., Ltd., a two liquid type of a bisphenol-type epoxy resin and an amine curing agent) was used, and as the base material A, the above-mentioned PBT was used, and as the base material B, the above-mentioned aluminum was used.

The two liquids of the joining agent were mixed, the mixture of the two liquids was applied to the surface of each of the base material A and the base material B over a region of 6 mm in length × 10 mm in width, and within 1 minute, the bonding was performed. Thereafter, the joining agent was cured to a thickness of 0.1 mm by leaving it in an oven at 100°C for 1 hour in a state of being fixed with a clip. Thereafter, the joining agent was cooled to room temperature. Thus, a joined body was produced.

In addition, a joined body for open time evaluation was also produced in the same manner as described above except that after the base material A and the base material B were superposed, they were allowed to stand for 3 days and then bonded to each other.

### <Comparative Example 6>

A joined body was obtained in the same manner as in Example 1 except that the heating temperature of the mold was set to 150°C (equal to or lower than the softening point of the base material A) and the base material A and the solid joining agent were joined.

### <Evaluation Method 1 of Joined Body>

The joined bodies obtained in Examples 1 to 9 and Comparative Examples 1 to 6 were subjected to measurement and evaluation of the following items. These measurement evaluation results are collectively shown in Table 1 below.

### (Shear Joining Force)

The joined bodies obtained in Examples and Comparative Examples were allowed to stand at a measurement temperature (23°C or 80°C) for 30 minutes or more, and then a tensile shear joining strength test was performed in 23°C and 80°C atmospheres using a tensile testing machine (universal testing machine Autograph "AG-X plus" (manufactured by Shimadzu Corporation); load cell 10 kN, tensile speed 10 mm/min) in accordance with ISO19095 to measure the joining strength.

### (Recycling Property)

The recycling property was determined based on whether or not the joined body could be easily peeled off with a force of 1 N or less after being placed on a hot plate at 200°C and heated for 1 minute. If the joined body could be peeled off, it was evaluated as good (A), and if not, it was evaluated as poor (B).

### (Repairing Property)

For each of the joined bodies produced by the Examples and the Comparative Examples, a joined body was produced again by the same operation as that of each Example and each Comparative Example using the base material A and the base material B of which the joint was released by the tensile shear strength test at 23°C, thereby obtaining a repair-joined body.

The shear joining force of the repair-joined body at 23°C was measured in the same manner as the above-mentioned test method, and it was evaluated as good (A) if the shear joining force was 80% or more of the first shear joining force, and it was evaluated as poor (B) if the shear joining force was less than 80%.

### (Open Time Evaluation)

Using the joined body for open time evaluation, the tensile shear joining strength test was performed at 23°C. When the shear joining force was 80% or more as compared with the test pieces prepared by the methods of the above-described Examples and Comparative Examples, it was evaluated as good (A), and when it was less than 80%, it was evaluated as poor (B). When the open time evaluation is good (A), it means that the open time is long and the convenience is excellent.

**Table 1**

| | | | | Example 1 | Example 2 | Example 3 | Example 4 | Example 5 | Example 6 | Example 7 | Example 8 | Example 9 |
|---|---|---|---|---|---|---|---|---|---|---|---|---|
| Composition | Base material A | Type | - | PBT | PBT | PBT | PBT | PBT | PBT | PBT | PBT | PBT |
| | Resin B | Type | - | Aluminum | Aluminum | Aluminum | Aluminum | Aluminum | Aluminum | Aluminum | Aluminum | Aluminum |
| | Solid joining agent | No. | | A-1 | A-2 | A-3 | A-4 | A-5 | A-6 | A-7 | A-8 | A-1 |
| | | Type | - | Thermo- plastic epoxy resin | Phenoxy resin | Thermo- plastic epoxy resin | Thermo- plastic epoxy resin | Thermo- plastic epoxy resin | Thermo- plastic epoxy resin | Thermo- plastic epoxy resin | Phenoxy resin | Thermo- plastic epoxy resin |
| | | Mw | - | 37000 | 50000 | 36000 | 35000 | 33000 | 30000 | 40000 | 50000 | 37000 |
| | | Heat of fusion | J/g | No melting peak | No melting peak | 2 | 4 | 11 | No melting peak | No melting peak | No melting peak | No melting peak |
| | | Melting point | °C | 171 | 164 | 157 | 153 | 135 | 150 | 170 | 164 | 171 |
| | | Epoxy equivalent | g/eq. | Above detection limit | Above detection limit | 9600 | 2100 | 1745 | Above detection limit | Above detection limit | Above detection limit | Above detection limit |
| Evaluation | Bonding force | 23°C Shear joining force | MPa | 25 | 24 | 20 | 20 | 23 | 18 | 29 | 20 | 8 |
| | | 80°C Shear joining force | Mpa | 20 | 17 | 17 | 15 | 15 | 13 | 19 | 16 | 5 |
| | Convenience | Recycling property | - | A | A | A | A | A | A | A | A | A |
| | | Repairing property | - | A | A | A | A | A | A | A | A | A |
| | | Open time evaluation | - | A | A | A | A | A | A | A | A | A |

| | | | | Comparative Example 1 | Comparative Example 2 | Comparative Example 3 | Comparative Example 4 | Comparative Example 5 | Comparative Example 6 | | | |
|---|---|---|---|---|---|---|---|---|---|---|---|---|
| Composition | Base material A | Type | - | PBT | PBT | PBT | PBT | PBT | PBT | | | |
| | Resin B | Type | - | Aluminum | Aluminum | Aluminum | Aluminum | Aluminum | Aluminum | | | |
| | Solid joining agent | No. | | B-1 | B-2 | B-3 | B-4 | B-5 | A-1 | | | |
| | | Type | - | Thermosetting epoxy resin | Polycarbonate | Epoxy resin | Thermosetting epoxy resin | Polyamide | Thermo- plastic epoxy resin | | | |
| | | Mw | - | - | - | 340 | - | - | 37000 | | | |
| | | Heat of fusion | J/g | No melting peak | No melting peak | 70 | No melting peak | 60 | No melting peak | | | |
| | | Melting point | °C | None | 220 | 60 | None | 101 | 171 | | | |
| | | Epoxy equivalent | g/eq. | - | - | 192 | - | - | Above detection limit | | | |
| Evaluation | Bonding force | 23°C Shear joining force | MPa | 1 | 2 | 0 | 15 | 1 | 5 | | | |
| | | 80°C Shear joining force | Mpa | 1 | 1 | 0 | 2 | 1 | 3 | | | |
| | Convenience | Recycling property | - | B | A | A | A | A | A | | | |
| | | Repairing property | - | B | A | A | B | A | A | | | |
| | | Open time evaluation | - | B | A | A | B | A | A | | | |

### <Example 10>

### (Production of Resin Member (Base Material A))

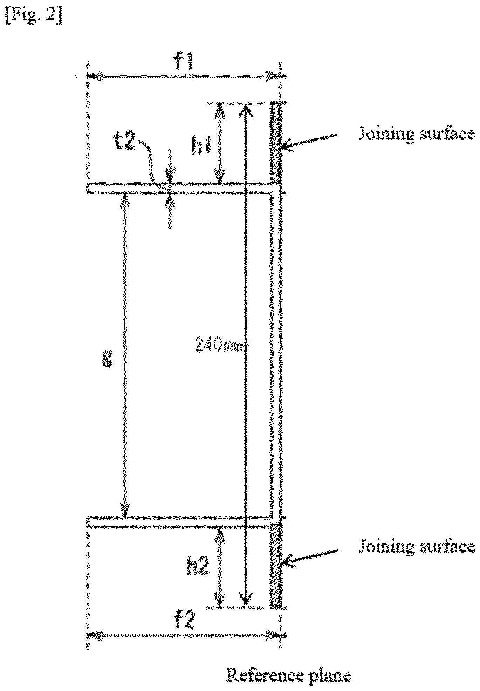

PBT (PBT containing 30% by mass of glass fibers) was molded by injection molding to produce a resin member having the cross section shown in Fig. 2 and a length of 240 mm (in the direction perpendicular to the cross section in Fig. 2). In Fig. 2, the thickness t2 of the resin member is 2.5 mm, the hatched portion is a joining surface, and the widths (h1 and h2) thereof are 26.3 mm. The protrusion amounts f1 and f2 of the reinforcing ribs are 50 mm, and the interval g between the two reinforcing ribs is 105 mm. The flatness of the joining surface with the solid joining agent was 0.5 mm at the maximum, and there was a dimensional error.

### (Production of Metal Member (Base Material B))

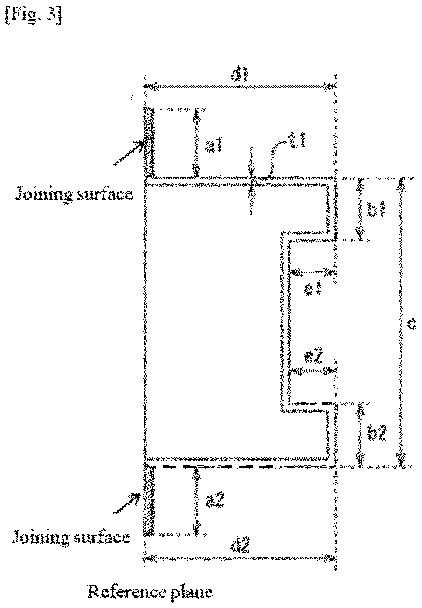

An A6061 alloy billet of an aluminum alloy was hot extruded to produce an extruded material having an open cross-sectional shape of a W-shaped hat shown in Fig. 3, and immediately after the extrusion, water quenching was performed, and after artificial aging treatment (200°C × 6 hours), the material was cut into a length of 400 mm (in the direction perpendicular to the cross section in Fig. 3) to produce a metal member. In Fig. 3, the thickness t1 of the metal member is 2.5 mm, the hatched portion is a joining surface, and the widths (a1 and a2) thereof are 26.3 mm. The height b1 of the upper surface and the height b2 of the lower surface were 18 mm, the height c of the front surface portion was 105 mm, the depth d1 of the upper portion and the depth d2 of the lower portion were 57.5 mm, and the depth e1 from the upper surface to the central recessed portion and the depth e2 from the lower surface to the central recessed portion were 15 mm. The flatness of the joining surface with the solid joining agent was 1 mm at the maximum, and there was a dimensional error. When the joining surface of the resin member and the joining surface of the metal member were superposed to each other, a gap of a maximum of 1.5 mm was formed.

### (Joining of Base Material A and Base Material B)

On a joining surface of a resin member, a solid joining agent cut into a shape conforming to the joining surface was disposed, and the temperature of the joining surface of the resin member and the solid joining agent was heated to 270°C using an infrared heater (manufactured by TRP Thermal Engineering), thereby obtaining a member in which the base material A and the solid joining agent were integrated.

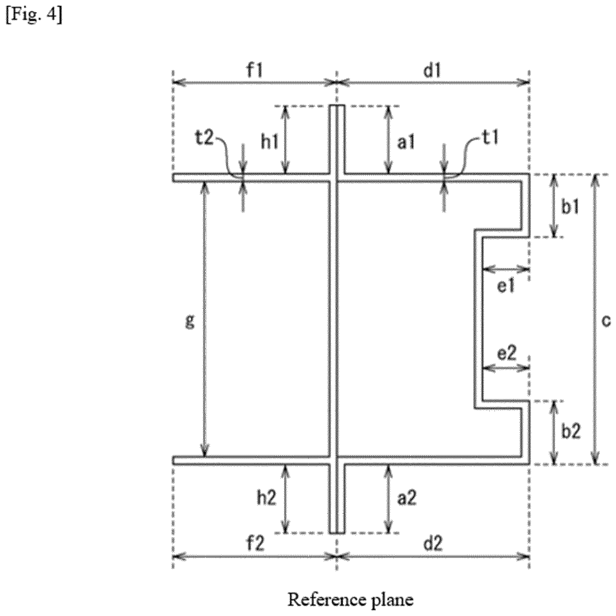

Next, the member and the metal member were disposed in a mold for seal molding having a built-in heater at a position where the joining portions of the member and the metal member were butted against each other. Each of the metal member and the resin member was heated to 210°C, the mold for seal molding was closed so that a pressure of 0.2 MPa was applied to the joining surface, and the metal member and the resin member were joined by being held for 30 seconds in a pressed state. In this way, a test sample (joined body) in which the metal member and the resin member were integrated was produced. A cross-sectional view of the joined body is shown in Fig. 4.

### <Examples 11 to 17, Comparative Examples 7 to 9, and Comparative Example 11>

Each joined body was obtained in the same manner as in Example 10 except that each of the solid joining agents A-2 to A-8, B-1 to B-3, and B-5 shown in Table 2 was used as the solid joining agent.

### <Example 18>

A joined body was obtained in the same manner as in Example 1 except that the heating temperature by the infrared heater was set to 210°C to obtain a member in which the base material A and the solid joining agent were integrated.

### <Comparative Example 10>

The resin member and the metal member were produced in the same manner as in Example 10.

As a joining agent, a heat-curable liquid epoxy adhesive E-250 (manufactured by Konishi Co., Ltd., a two liquid type of a bisphenol-type epoxy resin and an amine curing agent) was used, the two liquids of the joining agent were mixed, a mixture of the two liquids was applied to each of the joining surfaces of the resin member and the metal member, the resin member and the metal member were bonded within one minute. Thereafter, the joining agent was cured to a thickness of 0.1 mm by leaving it in an oven at 100°C for 1 hour in a state of being fixed with a clip. Thereafter, the joining agent was cooled to room temperature. Thus, a joined body was produced.

In addition, a joined body for open time evaluation was also produced in the same manner as described above, except that the mixture of the two liquids was applied to each of the joining surfaces of the resin member and the metal member, allowed to stand for 3 days, and then bonded.

### <Comparative Example 12>

A joined body was obtained in the same manner as in Example 10 except that the heating temperature of the mold was set to 150°C (equal to or lower than the softening point of the base material A) to obtain a joined body in which the base material A and the solid joining agent were integrated.

### <Evaluation Method 2 of Joined Body>

The joined bodies obtained in Examples 10 to 18 and Comparative Examples 7 to 12 were subjected to measurement and evaluation of the following items. These measurement evaluation results are collectively shown in Table 2 below.

### (Plastic Deformability (Three-point Bending Compression Test))

The test was carried out using a three-point bending compression testing machine having the configuration shown in Fig. 4. Specifically, a test sample was placed in the testing machine so that an indenter positioned above was positioned at the center of the test sample. Then, a load of 5 t or more was applied to the test sample through the indenter at a displacement rate of 1 mm/min in an atmosphere of 25°C. Based on the obtained data, a graph of a load-displacement curve in which displacement (mm) is plotted on the x-axis and load (t) is plotted on the y-axis was prepared. From this graph, the slope of the initial linear range (between 1 t and 2 t) was obtained, the parallel line based on the slope was shifted to the right, and the displacement amount (residual displacement) was obtained from the intersection point between the x-axis and the parallel line when the load-displacement curve at 5 t load and the parallel line crossed each other. Then, the residual strain amount (%) was calculated from the displacement amount based on the following equation (1). Here, the case where the residual strain amount was 0.20% or more and less than 0.50% was evaluated as "good", and the case where it was 0.50% or more was evaluated as "poor".Residual strain amount (%) = (6 × thickness of test sample × displacement amount)/(inter-fulcrum distance)2

In the formula (1), the inter-fulcrum distance was 300 mm.

### (Gap Filling Property)

A joined body in which the solid joining agent was present on the entire joining surface of the obtained joined body and there was no gap in the joining surface was evaluated as "good", and a joined body in which a portion in which the solid joining agent was not present was present or a gap was generated in the joining surface was evaluated as "poor".

**Table 2**

| | | | | Example 10 | Example 11 | Example 12 | Example 13 | Example 14 | Example 15 | Example 16 | Example 17 | Example 18 |
|---|---|---|---|---|---|---|---|---|---|---|---|---|
| Composition | Base material A | Type | - | PBT | PBT | PBT | PBT | PBT | PBT | PBT | PBT | PBT |
| | Resin B | Type | - | Aluminum | Aluminum | Aluminum | Aluminum | Aluminum | Aluminum | Aluminum | Aluminum | Aluminum |
| | Solid joining agent | No. | | A-1 | A-2 | A-3 | A-4 | A-5 | A-6 | A-7 | A-8 | A-1 |
| | | Type | - | Thermo-plastic epoxy resin | Phenoxy resin | Thermo-plastic epoxy resin | Thermo-plastic epoxy resin | Thermo-plastic epoxy resin | Thermo-plastic epoxy resin | Thermo-plastic epoxy resin | Phenoxy resin | Thermo-plastic epoxy resin |
| | | Mw | - | 37000 | 50000 | 36000 | 35000 | 33000 | 30000 | 40000 | 50000 | 37000 |
| | | Heat of fusion | J/g | No melting peak | No melting peak | 2 | 4 | 11 | No melting peak | No melting peak | No melting peak | No melting peak |
| | | Melting point | °C | 171 | 164 | 157 | 153 | 135 | 150 | 170 | 164 | 171 |
| | | Epoxy equivalent | g/eq. | Above detection limit | Above detection limit | 9600 | 2100 | 1745 | Above detection limit | Above detection limit | Above detection limit | Above detection limit |
| Evaluation | Dimensional error-absorbing capability | Plastic deformability | - | Good | Good | Good | Good | Good | Good | Good | Good | Good |
| | | Gap filling property | - | Good | Good | Good | Good | Good | Good | Good | Good | Good |

| | | | | Comparative Example 7 | Comparative Example 8 | Comparative Example 9 | Comparative Example 10 | Comparative Example 11 | Comparative Example 12 |
|---|---|---|---|---|---|---|---|---|---|
| Composition | Base material A | Type | - | PBT | PBT | PBT | PBT | PBT | PBT |
| | Resin B | Type | - | Aluminum | Aluminum | Aluminum | Aluminum | Aluminum | Aluminum |
| | Solid joining agent | No. | | B-1 | B-2 | B-3 | B-4 | B-5 | A-1 |
| | | Type | - | Thermosetting epoxy resin | Polycarbonate | Epoxy resin | Thermosetting epoxy resin | Polyamide | Thermo-plastic epoxy resin |
| | | Mw | - | - | - | 340 | - | - | 37000 |
| | | Heat of fusion | J/g | No melting peak | No melting peak | 70 | No melting peak | 60 | No melting peak |
| | | Melting point | °C | None | 220 | 60 | None | 101 | 171 |
| | | Epoxy equivalent | g/eq. | - | - | 192 | - | - | Above detection limit |
| Evaluation | Dimensional error-absorbing capability | Plastic deformability | - | Poor | Poor | Poor | Poor | Poor | Poor |
| | | Gap filling property | - | Poor | Good | Good | Good | Good | Poor |

### Industrial Applicability

The joined body obtained by the production method of the present invention is used, for example, as automobile components, such as a door side panel, an engine hood roof, a tailgate, a steering hanger, an A pillar, a B pillar, a C pillar, a D pillar, a crush box, a power control unit (PCU) housing, an electric compressor component (such as an inner wall, an intake port, an exhaust control valve (ECV) insertion part, and a mount boss), a lithium ion battery (LIB) spacer, a battery case, and an LED head lamp, and as structural members of a smartphone, a notebook personal computer, a tablet personal computer, a smartwatch, a large size liquid crystal display television set (LCD-TV), and an outdoor LED illumination, but are not particularly limited to these exemplified applications.

### Reference Signs List

1: Joined body
2: Joining layer
3: Base material A
4: Base material B

## Claims

1. A method for producing a joined body obtained by joining a base material A, a solid joining agent containing an amorphous thermoplastic resin, which is at least one of a thermoplastic epoxy resin and a phenoxy resin, as a main component, and a base material B in this order,
wherein
at least the base material A is a thermoplastic resin base material,
an epoxy equivalent of the amorphous thermoplastic resin is 1,600 g/eq. or more or the amorphous thermoplastic resin does not contain an epoxy group, and a heat of fusion of the amorphous thermoplastic resin is 15 J/g or less, and
wherein the method comprises:
a step of superposing the base material A, the solid joining agent, and the base material B in this order; and
a joining step (1) of joining the base material A and the base material B by pressurizing the base material A and the base material B via the solid joining agent in a state in which a temperature of the joining surface of at least one of the base material A, the solid joining agent, and the base material B is raised to the melting point thereof or higher.

2. A method for producing a joined body obtained by joining a base material A, a solid joining agent containing an amorphous thermoplastic resin, which is at least one of a thermoplastic epoxy resin and a phenoxy resin, as a main component, and a base material B in this order,
wherein
at least the base material A is a thermoplastic resin base material,
an epoxy equivalent of the amorphous thermoplastic resin is 1,600 g/eq. or more or the amorphous thermoplastic resin does not contain an epoxy group, and a heat of fusion of the amorphous thermoplastic resin is 15 J/g or less, and
wherein the method comprises:
a joining step (2-1) of joining at least one of the base material A and the base material B to the solid joining agent in a state in which a temperature of the joining surface of at least one of the base materials and the solid joining agent is raised to the melting point thereof or higher; and
a joining step (2-2) of joining the base material A and the base material B by pressurizing the base material A and the base material B via the solid joining agent in a state in which a temperature of the joining surface of at least one of the base material A and the base material B is raised to the softening point thereof or higher.

3. The method for producing a joined body according to claim 1, wherein in the joining step (1), the temperature of the joining surface is raised by heating with radiant heat.

4. The method for producing a joined body according to claim 2, wherein in the joining step (2-1), the temperature of the joining surface is raised by heating with radiant heat.

5. The method for producing a joined body according to claim 2 or 4, wherein in the joining step (2-2), the temperature of the joining surface is raised by heating with radiant heat.

6. The method for producing a joined body according to any one of claims 1 to 5, wherein the solid joining agent before melting has any shape selected from the group consisting of a film, a rod, a pellet, and a powder.

7. The method for producing a joined body according to any one of claims 1 to 6, wherein the solid joining agent before melting is a film.

8. The method for producing a joined body according to any one of claims 1 to 7, wherein the base material B is made of at least one of a resin and a metal.

9. The method for producing a joined body according to any one of claims 1 to 8, wherein the base material B is made of a metal.

10. The method for producing a joined body according to claim 8 or 9, further comprising a step of forming a primer layer made of a solid joining agent on the joining surface of the metal.
